(19) **Europäisches Patentamt**

**European Patent Office**

**Office européen des brevets**

(11) **EP 0 437 023 B1**

(12) **EUROPEAN PATENT SPECIFICATION**

(45) Date of publication and mention
of the grant of the patent:
**02.01.1997 Bulletin 1997/01**

(51) Int. Cl.$^6$: **B41J 2/36**, G06K 15/12

(21) Application number: **90311516.0**

(22) Date of filing: **19.10.1990**

(54) **Exposure control of energy sources**

Belichtungssteuerung von Energiequellen

Commande d'exposition de sources d'énergie

(84) Designated Contracting States:
**BE CH DE ES FR GB IT LI NL SE**

(30) Priority: **08.01.1990 GB 9000353**

(43) Date of publication of application:
**17.07.1991 Bulletin 1991/29**

(73) Proprietor: **MINNESOTA MINING AND
MANUFACTURING COMPANY
St. Paul, Minnesota 55133-3427 (US)**

(72) Inventor: **Macdonald, Norman Rennie
Bishop Stortford, Hertfordshire CM23 2DG (GB)**

(74) Representative: **Bowman, Paul Alan et al
LLOYD WISE, TREGEAR & CO.,
Commonwealth House,
1-19 New Oxford Street
London WC1A 1LW (GB)**

(56) References cited:
EP-A- 0 091 296          US-A- 4 409 599
US-A- 4 442 342          US-A- 4 525 729

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.13.10/3.4

## Description

This invention relates to controlling the delivery of energy to a medium from a plurality of energy sources in which different numbers of the sources are activated at different times.

More particularly the invention is concerned with sources which are activated for a predetermined time to deliver a required amount of energy. Circumstances arise where the energisation of the sources and the output power of the sources vary with the number of sources energised for a given exposure period, thereby leading to variations in the exposure energy delivered.

An example of this arises in printing on photo-sensitive material with arrays of light-emitting diodes (LEDs). LED arrays of linear configuration having very closely spaced diodes are already available and are commonly known as LED bars or line arrays. It will be understood that light in this context includes radiation both within and outside the visible spectrum.

LED bars find application in printing where a web of light-sensitive material to be irradiated or exposed in accord with the information to be printed is subject to a relative movement with respect to the bar that is normal to the length of the bar. The web may be advanced in increments or continuously and exposed on a line-by line basis. It is often preferred to use the LEDs in a mode in which they are either fully turned ON or OFF. This ON/OFF mode of operation is called bi-level control. The energy delivered by a given LED is thus controlled by setting the ON time for the LED.

Each LED in a bar typically requires 5mA of drive current to turn it fully on. Arrays are available with over 4000 diodes so that heavy currents may be drawn. In practice even with stabilised power supplies, there are voltage drops at the voltage bus or rail of the array itself. Investigations made with currently available LED bars have shown that there is a drop in the energising voltage level at the bar which increases with the number of LEDs simultaneously turned ON: the LED output intensity drops below that expected from the nominal supply voltage to an extent dependent on the number of LEDs simultaneously activated. The actual light output of the LEDs falls with the fall in supply voltage. This effect is also found where, instead of bi-level control, the LEDs are individually energised at a level that controls the exposure energy delivered (which may be referred to as analogue or multi-level control). The actual energisation level is less than that intended.

Similar problems arise in the use of thermal print bars. The latter resemble LED bars in that they comprise a linear array of several thousand imaging elements, each able to be energised independently of the others, in either a bi-level or multi-level fashion. In this case, however, the individual elements are micro-resistors designed to deliver pulses of heat to a suitable thermographic medium passing underneath in a continuous or stepped manner as described previously. Typically, each thermal element requires several milliamperes for full energisation, so that, for essentially the same reasons detailed above, the energy delivered by a particular element in a given pulse duration depends on the number of elements turned on at that time.

The variable loss of energy due to voltage drop is a function of the number of imaging elements (e.g. LEDs or micro-resistors) turned on at any one time. The loss is the difference between the energy actually delivered and that which would be ideally delivered by an imaging element during a strobe pulse of given duration at the nominal energising voltage. The energy loss can be compensated by adjusting the pulse duration.

U.S. patent US-A-4 409 599 (Casio Computer) discloses a thermal printer having a print-head comprising an array of electrically-powered, thermal print elements. The print-head is intended for use with an electronic portable calculator using a cell of small capacity as a voltage source. To compensate the variation of power supplied to the print elements due to different numbers of elements being selectively activated in response to different print information signals, there is provided an adjustment means responsive to the number of elements simultaneously activated and operable to adjust the duration for which the print elements are activated. In this patent the adjustment means comprises a counter arrangement for counting the number of elements to be simultaneously activated.

A similar technique is disclosed in British patent GB-A-2 090 030 (Sony) which also discloses a thermal print head comprising an array of print elements arranged in groups which are selectively energised at successive energy levels to obtain the intensity of printing required. This patent also discloses adjusting the duration for which element groups are simultaneously activated using a counter arrangement to detect the activated number of elements. In addition to requiring a complex counting system, the prior art assumes that each of the energised elements has an identical effect on system performance.

U.S. patent US-A-4 442 342 (Sharp) also discloses a thermal printer having a print-head powered by a battery. To compensate for the loss of voltage by the battery the battery voltage is sensed and used to adjust the duration for which the print head is energised so as to compensate the voltage loss. The sensing of the battery voltage is done by a voltage-to-frequency converter whose frequency output is used to control the duration of energisation.

There is disclosed hereinafter an exposure control system in accord with the present invention in which the pulse duration is made an inverse function of the bus voltage at the LED bar or thermal print bar. This system automatically caters for any differing effects resulting from variations between energised elements. In the system to be described the bus voltage is used to control the frequency of a master clock. Also by using a stepper motor as the media transport mechanism, the media speed can be adjusted automatically to ensure correct registration, despite varying line exposure times.

Broadly stated the present invention provides apparatus for applying image information to a material, comprising an array of electrically-powered, energy sources which are selectively activatable to deliver energy to the material,

a source of electrical power connected to said array of energy sources to supply electrical power thereto,
means responsive to an image information signal for selectively activating said energy sources for a predetermined duration in accord with said signal,
and adjustment means responsive to the number of energy sources selected for activation in accord with said signal to adjust the duration for which said sources are activated,
characterised in that:
said electrical power source is a power supply unit, the energy sources of said array are connected to a common power supply bus which is connected to said power supply unit for delivering electrical power from said unit to said array and at which voltage variations arise as a consequence of the number of energy sources activated in accord with said image information signal, and
said adjustment means is responsive to voltage variations arising on said common power supply bus to adjust the durations for which said selected sources are energised so as to counteract the voltage variations in determining the energy delivered to said material.

In the apparatus set forth in the preceding paragraph the operation of the array of energy sources may be considered in the following way. The energisation level of the activated sources varies from a nominal level to an extent that is a function of their number and affects their energy output. There is provided means responsive to the energisation level, specifically the bus voltage, of the activated sources to adjust the duration of activation of each activated source from the predetermined value such that the energy delivered by each activated source is substantially that which would have been delivered over the predetermined duration had said nominal energisation level been maintained.

In a preferred embodiment of the foregoing apparatus, the means responsive to the bus voltage comprises a voltage controlled oscillator (VCO), the frequency output of the VCO being used to control the durations of activation of the selected sources.

Specific examples of suitable energy sources for the practice of the invention are light-emitting diodes and thermal print-head elements.

It is a further aspect of the invention to provide a printer incorporating apparatus in accord with the invention as set forth above. Such a printer may include means for continuously transporting a medium of sensitive material past the array of energy sources to have an image formed on the medium, the transport means being responsive to the bus voltage for activating the selected sources to adjust the transport speed inversely with the adjustment of the duration of activation. In the case where the VCO responsive to the supply bus voltage is employed, the transport means may also be responsive to this voltage.

The invention and its practice will be further described with reference to the accompanying drawings in which:

Fig. 1 shows a printer for exposing photo-sensitive material with a clock control circuit responsive to bus supply voltage to vary exposure duration; and
Fig. 2 shows a printer using a long LED bar array with a continuously driven image mechanism.

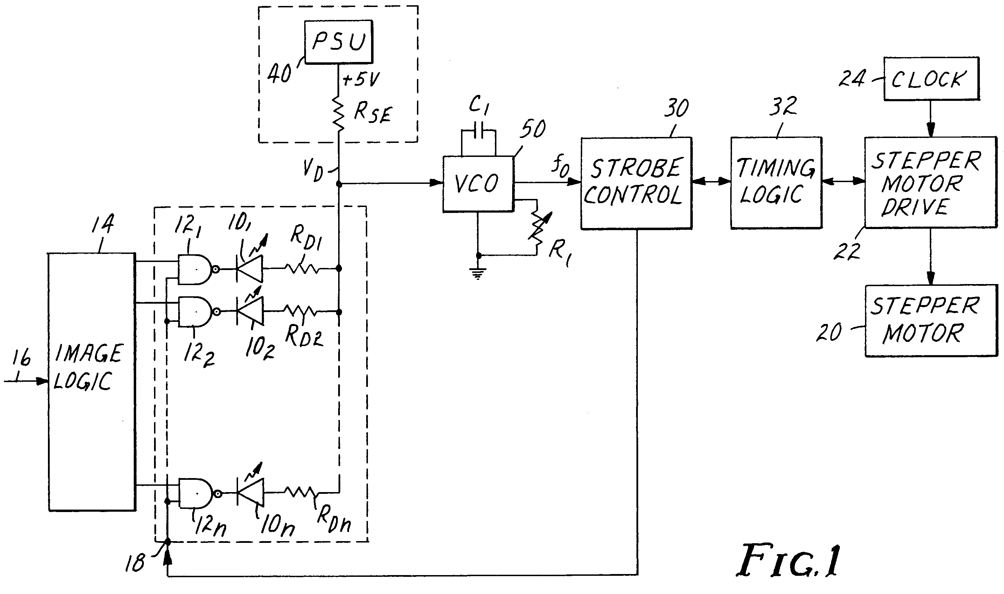

Fig. 1 shows an array 10 of LEDs $10_1 ...10_n$. The LEDs are part of a line array or bar mounted in a printer and extending transversely across a web of photo-sensitive material (not shown) which is moved in a direction normal to the line of the array. This movement is effected in steps by a stepper motor 20 in the printer driven from a clock controlled drive circuit 22 having a system clock 24.

The LEDs of array 10 are energised in a bi-level control system and selectively activated through first inputs of respective two-input, NAND gates $12_1 .... 12_n$ under the control of image-processing logic 14 receiving image data over line 16. The LEDs, gates and associated series resistors $R_{D1} .... R_{Dn}$ are shown enclosed in dotted line as all being part of an LED bar. The gates $12_1 ... 12_n$ have second inputs connected in common to a strobe terminal 18. The durations for which selected gates are enabled to cause the associated LEDs to deliver light output to the photo-sensitive material, are controlled by enabling the strobe terminal. By enabling the array with pulses of weighted durations the light energy delivered by the individual LEDs to their respective pixels on the material is controlled in accord with the image information. The strobe control circuitry is generally represented at 30. It interacts with the stepper motor drive through timing logic 32 such that the array exposure sequence and the stepping of the motor 20 to advance the web are performed alternately. In this embodiment the web is stationary whilst a line of the desired image is exposed.

It will be understood that the energy delivered to a pixel on the material in response to activation of a given LED of the array is a function of the energisation level of the LED and its duration. The array supply bus has a voltage $V_D$. The durations of the strobe pulses, viz. the exposure times, are initially determined on the assumption that the bus voltage $V_D$ is at its nominal level so that the energisation of the activated LEDs is fixed and the energy delivered is directly proportional to the duration of the exposure. The problem is that in bi-level control the energisation level is in practice a variable: or if a controlled energisation level is used to set the image density, on the material, the level will not be that instructed by the image information. The array energisation voltage is not constant and the light output of an activated LED varies with variations in the bus voltage $V_D$. Such variations have been found to occur even with a well-stabilised power supply unit. As already indicated a large LED array involves the supply and switching of currents that may be many amperes. In practice, although the supply is stabilised there is some impedance in the power unit and in the bus conductors whereby $V_D$ is not held at its precise nominal value, e.g. +5v. To exemplify this there is shown an ideal power supply unit 40 of perfectly stabilised voltage connected to the voltage bus $V_D$ at the array itself through a resistance $R_{SE}$ representing the equivalent resistance of all the impedance in the supply and the conductors to the array that contribute to the voltage drop that occurs at the array itself. It will be understood that this is not a full equivalent circuit of the impedances involved.

The actual energisation of those diodes selected to be activated, and thus their light output intensity, will depend on the bus voltage $V_D$. This will in turn depend on the current drawn from the supply and thus the number of diodes turned ON at any time. In the present case the voltage $V_D$ is used directly as a signal from which a compensatory control of exposure duration is arranged to ensure that the light energy delivered at the medium is substantially that required by the image information, or at least to significantly counteract the energy loss that would otherwise occur. The energy loss is dependent on the difference between $V_D$ and the nominal supply voltage. Before describing the manner in which the compensation is effected, the basis of the proposed control will be explained.

The voltage drop in $V_D$ from its nominal value ($V_s$) is a function of the number (p) of diodes turned ON. The energisation voltage $V_e$ for an activated diode can thus be written

$$V_e = f_1(p) \qquad (1)$$

The function is a monotonically decreasing function of p.

To compensate the drop in $V_e$ with p, the exposure duration is increased. The energy E delivered in an exposure of duration t can be written:

$$E = t.f_2(V_e) \qquad (2)$$

The exposure duration t can be expressed as a selected number N of clock intervals $t_c$, i.e. $t = N.t_c$ or as $t = N/F$ where F is the clock frequency and N is any positive integer including 1. Thus

$$E = N.f_2(V_e)/F \qquad (3)$$

Combining equations (1) and (3), we have

$$E = N.f_2(f_1(p))/F = N.f_3(p)/F \qquad (4)$$

If the master clock frequency F can also be controlled as a function of $f_3(p)$, then it should be possible to compensate for the number of diodes turned ON such that the energy delivered to the material by each diode is the required amount as set by the controlling image data.

Referring again to Fig. 1, the voltage $V_D$ is applied to the control input of a voltage controlled oscillator (VCO)50. The VCO has frequency controlling elements $C_1$ and $R_1$, $R_1$ being adjustable for frequency setting. One function chosen to compensate $f_3(p)$ in equation (4) above was a linear relationship of the VCO frequency with $V_D$. That is, as $V_D$ drops with the increasing current load, the VCO output frequency $f_o$ drops in proportion.

The frequency output $f_o$ of VCO 50 is applied to the strobe control circuit 30. It can be used to directly control the exposure duration by counting the appropriate number of cycles at frequency $f_o$ so that as $V_D$ drops and with it $f_o$, the exposure duration would increase and vice versa. Alternatively the frequency signal $f_o$ could be used to provide time increments for adjusting the length of pulses of pre-set durations.

The use of a linear relationship of VCO frequency to the voltage $V_D$ has provided in an experimental arrangement a significant improvement in unwanted image density variations on the photo-sensitive material. However, for better control it is necessary to determine and compensate the functions $f_1(p)$ and $f_2(V_e)$ more precisely.

The measurement and control technique described above is considered advantageous in that it involves no signal processing under software control which would introduce delays in the overall response. It is also applicable to both bi-level printers and to printers employing analogue multi-level control of the LED array output.

Mention has already been made of the thermal print bars. A thermal print bar can be controlled and compensated for supply voltage variation in a manner similar to the LED bar that has been described.

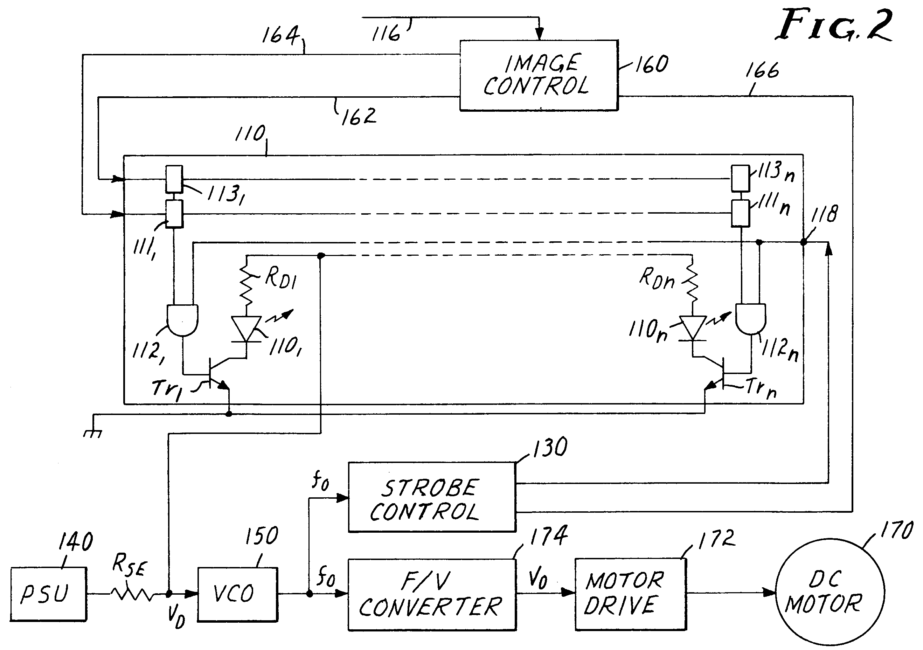

Fig. 2 shows another LED bar printer illustrating more fully the supply of image data to the LED bar. It also illustrates a printer in which the photo-responsive medium is driven continuously by a DC motor which is a less costly component than a stepper motor. In this case a further measure is taken to adjust the transport speed of the medium in accord with the adjusted exposure times.

In Fig. 2, the LED bar 110 is shown as including the array of LEDs $110_1$-$110_n$. Each LED is driven through a respective one of transistors $Tr_1$-$Tr_n$ controlled by respective two input AND-gates $112_1$-$112_n$. All the AND-gates have one input connected to a common strobe input 118. The other inputs of the AND-gates are controlled by respective latch registers $111_1$-$111_n$ which receive data bits from shift registers $113_1$-$113_n$. These register groups are integral parts of the LED bar.

Image source data is provided on line 116 and is supplied to the LED bar assembly 110 through an image control unit 160. The unit 160 supplies a series of $n$ data bits to the shift registers over line 162. It also provides a latch signal over line 164 to cause the bits in the shift registers to be transferred to the latch registers. Upon enabling strobe input 118, each diode $110_1$-$110_n$ is activated or not in accord with the state of the associated latch register, the duration of activation being determined by the length of the strobe enable pulse. The LED bar assembly enables the shift registers to be loaded with a fresh set of data while the latch registers are controlling the exposure set by the existing data.

As already mentioned in connection with Fig. 1, the strobe pulses may be applied in a weighted sequence, say $m$ pulses in a binary weighted sequence of $2^{m-1}$, $2^{m-2}$ ... $2^0$ (=1) units of time. The total exposure to be given by any LED can be set by a respective m-bit binary word. Thus each LED is controlled in accord with the value of a control word. These control words are supplied to the LED bar bit by bit, most to least significant or vice versa, and thus a series of data bits sent to the shift register represents a slice through a given bit position of all the control words and when these are transferred to the latch registers the strobe pulse is given the appropriate weighted duration. The image control unit performs the data manipulation - bit slicing as we may call it - and provides a strobe initiate signal on line 166 to correlate all operations.

The LED bus supply line $V_D$ is provided by a power supply unit which, as in Fig. 1, is represented by an ideal PSU 140 and a notional series resistor $R_{se}$. The bus voltage is applied to VCO 150, to provide the voltage dependent clock signal $f_o$ to strobe control circuit 130 which supplies to input 118 the basic sequence of weighted strobe pulses adjusted in duration to compensate for the deviation of $V_D$ from its nominal voltage.

Fig. 2 also shows a further measure concerned with the exposure compensation. As already mentioned, the medium being imaged may be continuously driven, for example by a DC motor 170 with associated motor drive circuit 172. The motor drive circuit is supplied with a voltage $V_o$ from a frequency-to-voltage (F/V) converter 174. Thus voltage $V_o$ will vary in sympathy with bus supply voltage $V_D$. It could, of course, be derived from $V_D$ in other ways. The voltage $V_o$ is used to control the speed of motor 170 in such a way that the media transport speed is reduced to compensate for an increase in exposure time. This compensation acts to maintain media registration despite varying exposure conditions.

It will be understood that a similar provision can be made where a thermal print head is used.

## Claims

1. Apparatus for applying image information to a material, comprising an array (10, 110) of electrically-powered, energy sources which are selectively activatable to deliver energy to the material,

    a source (40, 140) of electrical power connected to said array (10, 110) of energy sources to supply electrical power thereto,
    means (14, 160) responsive to an image information signal (16, 116) for selectively activating said energy sources ($10_1$ ....$10_n$, $110_1$ ....$110_n$) for a predetermined duration in accord with said signal (116),
    and adjustment means (50, 150) responsive to the number of energy sources selected for activation in accord with said signal (16, 116) to adjust the duration for which said sources are activated,
        characterised in that:
    said electrical power source is a power supply unit (40, 140), the energy sources of said array (10, 110) are connected to a common power supply bus ($V_D$) which is connected to said power supply unit (40, 140) for delivering electrical power from said unit (40, 140) to said array and at which voltage variations arise as a consequence of the number of energy sources activated in accord with said image information signal (16, 116), and
    said adjustment means (50) is responsive to voltage variations arising on said common power supply bus ($V_D$) to adjust the durations for which said selected sources are energised so as to counteract the voltage variations in determining the energy delivered to said material.

2. Apparatus as claimed in Claim 1 in which said adjustment means (50, 150) is adapted to adjust the duration of activation of selected energy sources beyond a predetermined duration which corresponds to a predetermined voltage supplied by said power supply unit (40, 140).

3. Apparatus as claimed in Claim 1 or 2 in which said adjustment means (50, 150) comprises a voltage controlled oscillator (VCO) responsive to the voltage on said common bus ($V_D$), the frequency output ($f_o$) of the VCO (50, 150) being used to control the durations of activation of the selected sources.

4. Aparatus as claimed in any preceding claim in which said sources ($10_1$ .... $10_n$, $110_1$ .... $110_n$) are light-emitting diodes.

5. Apparatus as claimed in any one of Claims 1 to 3 in which said sources ($10_1$ .... $10_n$, $110_1$ .... $110_n$) are thermal print-head elements.

6. Apparatus as claimed in any preceding claim in which said power supply unit is a stabilized power supply unit.

7. A printer incorporating apparatus as claimed in any preceding claim.

8. A printer incorporating apparatus as claimed in any one of Claims 1 to 6 and including means (20, 170) for continuously transporting a medium of sensitive material past said array (10, 110) of energy sources to have an image formed on the medium, said transport means (170) being responsive to the voltage on said common power supply bus ($V_D$) to adjust the transport speed inversely with the adjustment of the duration of activation.

**Patentansprüche**

1. Einrichtung zum Auftragen von Bildinformation auf ein Material mit: einem Feld (10, 110) elektrisch gespeister Energiequellen, die wahlweise aktivierbar sind, um auf das Material Energie zu übertragen,

    einer mit dem Feld (10, 110) der Energiequellen verbundenen Quelle (40, 140) elektrischer Leistung, um ihnen elektrische Leistung zuzuführen,
    einer auf ein Bildinformationssignal (16, 116) ansprechenden Einrichtung (14, 160) zur wahlweisen Aktivierung der Energiequellen ($10_1$ ... $10_n$, $110_1$ ... $110_n$) in Übereinstimmung mit dem Signal (116) eine bestimmte Zeitdauer lang,
    und einer Einstelleinrichtung (50, 150), die auf die Anzahl der in Übereinstimmung mit dem Signal (16, 116) zur Aktivierung ausgewählten Energiequellen anspricht, um die Zeitdauer einzustellen, in der die Quellen aktiviert sind,
    **dadurch gekennzeichnet,**
    daß die elektrische Spannungsquelle eine Spannungsversorgungseinheit (40, 140) ist, die Energiequellen des Feldes (10, 110) mit einem gemeinsamen Spannungsversorgungsbus ($V_D$) verbunden sind, der mit der Spannungsversorgungseinheit (40, 140) zum Übertragen elektrischer Leistung von der Einheit (40, 140) an das Feld verbunden ist, und an dem als Folge der Anzahl der in Übereinstimmung mit dem Bildinformationssignal (16, 116) aktivierten Energiequellen Spannungsschwankungen entstehen, und die Einstelleinrichtung (50) auf die an dem gemeinsamen Spannungsversorgungsbus ($V_D$) entstehenden Spannungsschwankungen anspricht, um die Zeitdauern einzustellen, in denen die ausgewählten Quellen eingeschaltet werden, um den Spannungsschwankungen durch Ermitteln der an das Material übertragenen Energie entgegenzuwirken.

2. Einrichtung nach Anspruch 1, bei der die Einstelleinrichtung (50, 150) so angepaßt ist, daß sie die Aktivierungsdauer der ausgewählten Energiequellen über eine bestimmte Zeitdauer hinaus einstellen, die einer bestimmten von der Spannungsversorgungseinheit (40, 140) zugeführten Spannung entspricht.

3. Einrichtung nach Anspruch 1 oder 2, bei der die Einstelleinrichtung (50, 150) einen spannungsgesteuerten Oszillator (VCO) aufweist, der auf die Spannung an dem gemeinsamen Bus ($V_D$) anspricht, wobei die Frequenzausgabe ($f_0$) des VCO (50, 150) verwendet wird, um die Aktivierungsdauern der ausgewählten Quellen zu steuern.

4. Einrichtung nach einem der vorstehenden Ansprüche, bei der die Quellen ($10_1$ ... $10_n$, $110_1$ ... $110_n$) lichtemittierende Dioden sind.

5. Einrichtung nach einem der Ansprüche 1 bis 3, bei der die Quellen ($10_1$ ... $10_n$, $110_1$ ... $110_n$) thermische Druckkopfelemente sind.

6. Einrichtung nach einem der vorstehenden Ansprüche, bei der die Spannungsversorgungseinheit eine stabilisierte Spannungsversorgungseinheit ist.

7. Einen Drucker enthaltende Einrichtung nach einem der vorstehenden Ansprüche.

8. Einen Drucker enthaltende Einrichtung nach einem der Ansprüche 1 bis 6 mit einer Einrichtung (20, 170) zum fortlaufenden Transportieren eines Mediums aus empfindlichem Material über das Feld (10, 110) der Energiequellen hinweg, um auf dem Medium ein Bild auszubilden, wobei die Transporteinrichtung (170) auf die Spannung an dem gemeinsamen Spannungsversorgungsbus ($V_D$) anspricht, um die Transportgeschwindigkeit umgekehrt zu der Einstellung der Aktivierungsdauer einzustellen.

**Revendications**

1. Dispositif pour appliquer des informations d'image sur une matière, comprenant une série (10, 110) de sources d'énergie alimentées électriquement et qui peuvent être activées sélectivement pour fournir de l'énergie à la matière,

    une source (40, 140) d'alimentation électrique connectée à la série (10, 110) de sources d'énergie pour y fournir de l'énergie électrique, des moyens (14, 160) sensibles à un signal d'information d'image (16, 116) afin d'activer sélectivement les sources d'énergie ($10_1$ ... $10_n$, $110_1$ ... $110_n$) pendant une durée prédéterminée conformément au signal précité (116), et des moyens de réglage (50, 150) sensibles au nombre de sources d'énergie sélectionnées en vue d'une activation conformément au signal (16, 116) précité pour régler la durée pendant laquelle les sources sont activées, caractérisé en ce que :

la source d'alimentation électrique est un bloc d'alimentation électrique (40, 140), les sources d'énergie de la série (10, 110) sont connectées à un bus d'alimentation électrique commun ($V_D$) qui est connecté au bloc d'alimentation électrique (40, 140) en vue de fournir à ladite série une énergie électrique en provenance du bloc (40, 140) et sur lequel des variations de tension surviennent comme conséquence du nombre de sources d'énergie activées conformément au signal d'information d'image (16, 116), et

les moyens de réglage (50) sont sensibles à des variations de tension survenant sur le bus d'alimentation électrique ($V_D$) commun, afin de régler les durées pendant lesquelles les sources sélectionnées sont alimentées en énergie de façon à contrecarrer les variations de tension en déterminant l'énergie fournie à la matière.

2. Dispositif suivant la revendication 1, caractérisé en ce que les moyens de réglage (50, 150) sont adaptés pour régler la durée d'activation de sources d'énergie sélectionnées, au-delà d'une durée prédéterminée qui correspond à une tension prédéterminée fournie par le bloc d'alimentation électrique (40, 140).

3. Dispositif suivant la revendication 1 ou 2, caractérisé en ce que les moyens de réglage (50, 150) comprennent un oscillateur commandé par tension (VCO) sensible à la tension sur le bus commun ($V_D$), le signal de sortie en fréquence ($f_o$) du VCO (50, 150) étant utilisé pour commander les durées d'activation des sources sélectionnées.

4. Dispositif suivant l'une quelconque des revendications précédentes, caractérisé en ce que les sources ($10_1$ ....$10_n$, $110_1$ ....$110_n$) sont des diodes électroluminescentes.

5. Dispositif suivant l'une quelconque des revendications 1 à 3, caractérisé en ce que les sources ($10_1$ ....$10_n$, $110_1$ ....$110_n$) sont des éléments de tête d'impression thermique.

6. Dispositif suivant l'une quelconque des revendications précédentes, caractérisé en ce que le bloc d'alimentation électrique est un bloc d'alimentation électrique stabilisée.

7. Imprimante comprenant un dispositif tel que revendiqué dans l'une quelconque des revendications précédentes.

8. Imprimante comprenant un dispositif tel que revendiqué dans l'une quelconque des revendications 1 à 6 et comprenant des moyens (20, 170) pour transporter en continu un support de matière sensible au-delà de ladite série (10, 110) de sources d'énergie afin d'avoir une image formée sur le support, les moyens de transport (170) étant sensibles à la tension du bus d'alimentation électrique commun ($V_D$) pour régler la vitesse de transport inversement au réglage de la durée d'activation.

FIG.1

EP 0 437 023 B1

FIG.2